# EUROPEAN PATENT APPLICATION

(11) **EP 4 803 574 A1**
(43) Date of publication of application: **09.09.2026**
(21) Application number: 24885384.8
(22) Date of filing: 08.10.2024
(51) Int. Cl.: C08L 21/00, B60C 1/00, C08L 93/04, C09F 1/00

(54) **RUBBER ADDITIVE, RUBBER COMPOSITION, AND TIRE**

(30) Priority: 30.10.2023 JP 2023185973
(71) Applicant: Harima Chemicals, Incorporated, Kakogawa-shi, Hyogo 675-0019 (JP)
(72) Inventor: MINAMINO, Yukiya, Tsukuba-shi, Ibaraki 300-2635 (JP); NOMURA, Kota, Tsukuba-shi, Ibaraki 300-2635 (JP); MIYAKITA, Soki, Tsukuba-shi, Ibaraki 300-2635 (JP); KAI, Ryota, Tsukuba-shi, Ibaraki 300-2635 (JP); ARAMAKI, Takashi, Tsukuba-shi, Ibaraki 300-2635 (JP)
(74) Representative: SSM Sandmair
(86) International application number: PCT/JP2024/035921
(87) International publication number: WO 2025/094609

(57) **Abstract**

An additive for rubber contains an ester compound. The ester compound contains a rosin-based ester compound having three or more ester bonds in one molecule and a fatty acid-based ester compound having three or more ester bonds in one molecule.

## Description

### TECHNICAL FIELD

The present invention relates to an additive for rubber, a rubber composition, and a tire.

### BACKGROUND ART

Conventionally, various additives for rubber have been known. More specifically, as the additive for rubber, for example, plasticizers and softeners are known. The plasticizer and the softener reduce viscosity of a rubber composition. Therefore, workability in kneading the rubber composition is improved by use of the plasticizer and the softener.

As the plasticizer and the softener, a tall oil ester-based oil is proposed. The tall oil ester-based oil is, for example, produced by subjecting a tall oil (fatty acid of 45%, rosin of 38%, acid value of 157) and a diethylene glycol to an esterification reaction (OH/ COOH= 1.2) under an ester catalyst (ref: for example, Patent Document 1 (Synthesis Example 1)).

### Citation List

### Patent Document

Patent Document 1: Japanese Unexamined Patent Publication No. 2008-201933

### SUMMARY OF THE INVENTION

### PROBLEM TO BE SOLVED BY THE INVENTION

On the other hand, a molded article (rubber product) of the rubber composition may be required to have a wet grip property in accordance with its applications. However, when the rubber composition contains the above-described tall oil ester-based oil, the molded article (rubber product) of the rubber composition does not have the sufficient wet grip property.

The present invention provides an additive for rubber capable of obtaining a rubber composition having excellent low viscosity and obtaining a molded article having an excellent wet grip property, a rubber composition, and a tire.

### MEANS FOR SOLVING THE PROBLEM

The present invention [1] includes an additive for rubber containing an ester compound, wherein the ester compound contains a rosin-based ester compound having three or more ester bonds in one molecule and a fatty acid-based ester compound having three or more ester bonds in one molecule.

The present invention [2] includes the additive for rubber described in the above-described [1], wherein the rosin-based ester compound contains a reaction product of a carboxy group-containing component and an alcohol component, the carboxy group-containing component contains rosins, and the alcohol component contains a trihydric or more alcohol.

The present invention [3] includes the additive for rubber described in the above-described [2], wherein a content ratio of an abietadiene acid is 50% by mass or less with respect to the total amount of the rosins.

The present invention [4] includes the additive for rubber described in any one of the above-described [1] to [3], wherein the fatty acid-based ester compound contains a reaction product of a carboxy group-containing component and an alcohol component, and/or contains an oil and fat; the carboxy group-containing component contains fatty acids; and the alcohol component contains a trihydric or more alcohol.

The present invention [5] includes the additive for rubber described in the above-described [4], wherein an iodine value of the fatty acids is 170 or less.

The present invention [6] includes the additive for rubber described in the above-described [1], wherein the ester compound contains a reaction product of a carboxy group-containing component and an alcohol component, the carboxy group-containing component contains rosins and fatty acids, and the alcohol component contains a trihydric or more alcohol.

The present invention [7] includes the additive for rubber described in the above-described [6], wherein the ester compound contains a collective reaction product of the rosins and the fatty acids, and the alcohol component.

The present invention [8] includes the additive for rubber described in the above-described [6] or [7], wherein the ester compound contains a mixture of a reaction product of the rosins and the alcohol component, and a reaction product of the fatty acids and the alcohol component.

The present invention [9] includes the additive for rubber described in any one of the above-described [6] to [8], wherein an iodine value of the fatty acids is 170 or less.

The present invention [10] includes the additive for rubber described in any one of the above-described [6] to [9], wherein a content ratio of an abietadiene acid is 50% by mass or less with respect to the total amount of the rosins.

The present invention [11] includes a rubber composition containing the additive for rubber described in any one of the above-described [1] to [10].

The present invention [12] includes a tire containing a molded article of the rubber composition described in the above-described [11].

### EFFECT OF THE INVENTION

In the additive for rubber of the present invention, the ester compound contains the rosin-based ester compound having three or more ester bonds in one molecule and the fatty acid-based ester compound having three or more ester bonds in one molecule. Therefore, according to the above-described rubber composition, it is possible to obtain the rubber composition having excellent low viscosity, and further, to obtain the molded article having an excellent wet grip property.

Since the rubber composition of the present invention contains the above-described additive for rubber, it has the excellent low viscosity. Further, according to the rubber composition, it is possible to obtain the molded article having the excellent wet grip property.

Since the tire of the present invention contains the molded article of the above-described rubber composition, it has excellent productivity and also has the excellent wet grip property.

### DESCRIPTION OF EMBODIMENTS

### 1. Additive for Rubber

### [Ester Compound]

An additive for rubber contains an ester compound. Preferably, an additive for rubber consists of an ester compound.

The ester compound contains a rosin-based ester compound having three or more ester bonds in one molecule (described later) and a fatty acid-based ester compound having three or more ester bonds in one molecule (described later). The above-described ester compound is, for example, obtained from a carboxy group-containing component and an alcohol component. Specifically, the ester compound contains a reaction product of the carboxy group-containing component and the alcohol component.

### [Carboxy Group-Containing Component]

The carboxy group-containing component contains rosins and fatty acids. The carboxy group-containing component preferably consists of rosins and fatty acids.

The rosins are derived from plants and contain a compound containing a carboxy group. By using the rosins, the additive for rubber having an excellent biomass degree is obtained. Examples of the rosins include non-modified rosins and rosin modified products.

Examples of the non-modified rosin include natural rosins. The natural rosin is a natural resin mainly made of a resin acid. The resin acid is a compound having the carboxy group derived from a tree. In addition, the resin acid is, for example, an acid having a ring structure (that is, non-fatty acids). Examples of the ring structure include aromatic rings, saturated alicyclic rings, and unsaturated alicyclic rings.

More specifically, examples of the resin acid include a resin acid having a conjugated double bond and a resin acid having no conjugated double bond.

Examples of the resin acid having a conjugated double bond include abietadiene acids. Examples of the abietadiene acid include abietic acids, palustric acids, and neoabietic acids. Examples of the resin acid having no conjugated double bond include dehydroabietic acids, dihydroabietic acids, and tetrahydroabietic acids. These may be used alone or in combination of two or more.

More specifically, examples of the natural rosin include tall oil rosins, gum rosins, and wood rosins. These may be used alone or in combination of two or more. Preferably, a tall oil rosin and a gum rosin are used. From the viewpoint of mechanical strength, more preferably, a tall oil rosin is used. In addition, from the viewpoint of low viscosity and a wet grip property, more preferably, a gum rosin is used.

The rosin modified product is a modified product of the above-described non-modified rosin. Examples of the rosin modified product include polymerized rosins, acid-modified rosins, hydrogenated rosins, phenol-modified rosins, and disproportionated rosins. These may be used alone or in combination of two or more. Preferably, a disproportionated rosin is used.

These rosins may be used alone or in combination of two or more. The rosins are appropriately selected in accordance with its purpose and applications.

More specifically, from the viewpoint of vulcanization stability, as the rosins, preferably, a disproportionated rosin is used. In addition, from the viewpoint of the wet grip property, as the rosins, preferably, a tall oil rosin and a gum rosin are used, more preferably, a gum rosin is used.

In addition, as described above, the rosins may contain a resin acid having a conjugated double bond. The resin acid having a conjugated double bond may cause a decrease in the vulcanization stability of a rubber composition (described later). Among others, the abietadiene acid (abietic acid, palustric acid, and neoabietic acid) may cause the decrease in the vulcanization stability of the rubber composition (described later).

Therefore, from the viewpoint of the vulcanization stability, a content ratio of the abietadiene acid with respect to the total amount of the rosins is preferably relatively small. The content ratio of the abietadiene acid is the total amount of the content ratio of the abietic acid, the content ratio of the palustric acid, and the content ratio of the neoabietic acid.

More specifically, from the viewpoint of the vulcanization stability, the content ratio of the abietadiene acid is, for example, 60% by mass or less, preferably 50% by mass or less, more preferably 35% by mass or less, further more preferably 25% by mass or less, even more preferably 15% by mass or less, particularly preferably 5% by mass or less with respect to the total amount of the rosins. In addition, the content ratio of the abietadiene acid is, for example, 0% by mass or more with respect to the total amount of the rosins. The content ratio of the abietadiene acid is measured based on GCMS analysis (mass analysis) in conformity with Examples to be described later.

An iodine value of the rosins is, for example, 0 to 200, preferably 0 to 100. More specifically, from the viewpoint of improving workability, the iodine value of the rosins is, for example, 200 or less, preferably 100 or less. In addition, the iodine value of the rosins is, for example, 0 or more. The iodine value of the rosins is measured in conformity with JIS K 0070 (1992).

The fatty acids are acids having no ring structure. Examples of the fatty acids include fatty acids having 2 to 30 carbon atoms, and preferably, fatty acids having 10 to 25 carbon atoms are used. More specifically, examples of the fatty acids include saturated fatty acids and unsaturated fatty acids.

Examples of the saturated fatty acid include saturated fatty acids having 2 to 30 carbon atoms. More specifically, examples of the saturated fatty acid include octylic acids, isostearic acids, capric acids, lauric acids, myristic acids, palmitic acids, stearic acids, arachidic acids, behenic acids, lignoceric acids, cerotic acids, montanic acids, and melissic acids. These may be used alone or in combination of two or more.

Examples of the unsaturated fatty acid include unsaturated fatty acids having 2 to 30 carbon atoms. More specifically, examples of the unsaturated fatty acid include palmitoleic acids, oleic acids, elaidic acids, erucic acids, linoleic acids, linolenic acids, gadoleic acids, and arachidonic acids. These may be used alone or in combination of two or more.

Further, examples of the fatty acids include animal and plant-derived fatty acids. Examples of the animal and plant-derived fatty acid include plant-derived fatty acids and animal-derived fatty acids. More specifically, examples of the plant-derived fatty acid include coconut fatty acids, rice bran fatty acids, castor oil fatty acids, safflower oil fatty acids, linseed oil fatty acids, tung oil fatty acids, soybean oil fatty acids, sesame oil fatty acids, poppy oil fatty acids, perilla oil fatty acids, hemp seed oil fatty acids, grape kernel oil fatty acids, corn oil fatty acids, tall oil fatty acids, sunflower oil fatty acids, cottonseed oil fatty acids, and walnut oil fatty acids. Examples of the animal-derived fatty acid include tallow fatty acids, lard fatty acids, and fish oil fatty acids. These may be used alone or in combination of two or more.

These fatty acids may be used alone or in combination of two or more. The fatty acids are appropriately selected in accordance with its purpose and applications.

For example, from the viewpoint of an environmental property, as the fatty acids, preferably, animal and plant-derived fatty acid is used, more preferably, a plant-derived fatty acid is used, further more preferably, a tall oil fatty acid and a coconut oil fatty acid are used. By using the animal and plant-derived fatty acid, the additive for rubber having the excellent biomass degree is obtained.

In addition, from the viewpoint of the mechanical strength, as the fatty acids, preferably, a saturated fatty acid having 2 to 30 carbon atoms is used, more preferably, a stearic acid is used.

The iodine value of the fatty acids is, for example, 0 to 200, more preferably 0 to 170, further more preferably 0 to 140, even more preferably 0 to 100, still more preferably 0 to 45, particularly preferably 0 to 15. More specifically, from the viewpoint of the mechanical strength, the iodine value of the fatty acids is, for example, 200 or less, preferably 170 or less, more preferably 140 or less, further more preferably 100 or less, even more preferably 45 or less, particularly preferably 15 or less. Further, the iodine value of the fatty acids is, for example, 0 or more. As in Examples to be described later, the iodine value of the fatty acids is measured in conformity with JIS K 0070 (1992). In addition, as in Examples to be described later, the iodine value of the fatty acids can be also calculated by confirming a peak derived from the fatty acids by thermal decomposition GCMS analysis and by obtaining a molecular structure of the confirmed fatty acids.

A combination ratio of the rosins and the fatty acids is appropriately set in accordance with its desired property. More specifically, the content ratio of the rosins is, for example, 10 to 90 mol, preferably 20 to 90 mol, more preferably 30 to 90 mol, further more preferably 35 to 80 mol, particularly preferably 40 to 60 mol with respect to 100 mol of the total sum of the rosins and the fatty acids. Further, the content ratio of the fatty acids is, for example, 10 to 90 mol, preferably 10 to 80 mol, more preferably 10 to 70 mol, further more preferably 20 to 65 mol, particularly preferably 40 to 60 mol with respect to 100 mol of the total sum of the rosins and the fatty acids.

In particular, from the viewpoint of the wet grip property, preferably, the content of the rosins is relatively large and the content of the fatty acids is relatively small. For example, a lower limit of the content ratio of the rosins is preferably 30 mol or more, more preferably 35 mol or more, further more preferably 40 mol or more, even more preferably 60 mol or more, particularly preferably 80 mol or more with respect to 100 mol of the total sum of the rosins and the fatty acids. In addition, an upper limit of the content ratio of the fatty acids is preferably 70 mol or less, more preferably 65 mol or less, further more preferably 60 mol or less, even more preferably 40 mol or less, particularly preferably 20 mol or less with respect to 100 mol of the total sum of the rosins and the fatty acids.

On the other hand, from the viewpoint of the low viscosity, preferably, the content of the rosins is relatively small and the content of the fatty acids is relatively large. For example, the upper limit of the content ratio of the rosins is preferably 90 mol or less, more preferably 80 mol or less, further more preferably 60 mol or less, even more preferably 40 mol or less with respect to 100 mol of the total sum of the rosins and the fatty acids. In addition, the lower limit of the content ratio of the fatty acids is preferably 10 mol or more, more preferably 20 mol or more, further more preferably 40 mol or more, even more preferably 60 mol or more with respect to 100 mol of the total sum of the rosins and the fatty acids.

As the details are described later, a combination form of the rosins and the fatty acids is not particularly limited in the carboxy group-containing component.

For example, the rosins and the fatty acids may be also mixed at the above-described ratio by a known method to be used.

Further, for example, the rosins and the fatty acids may be also prepared at the above-described ratio to be used individually without being mixed.

In addition, the rosins and the fatty acids may be also used without being mixed, and for example, a composition containing the rosins and the fatty acids at the above-described ratio from the beginning (hereinafter, a combination composition) may be also used. Examples of the combination composition include tall oils. The tall oil contains, for example, a tall oil rosin and tall oil fatty acids at the above-described ratio.

### [Alcohol Component]

The alcohol component contains a trihydric or more alcohol. The alcohol component preferably consists of a trihydric or more alcohol.

Examples of the trihydric or more alcohol include trihydric alcohols, tetrahydric alcohols, pentahydric alcohols, and hexahydric or more alcohols. Examples of the trihydric alcohol include glycerin, trimethylolpropane, trimethylolethane, and triethylolethane. An example of the tetrahydric alcohol includes pentaerythritol. Examples of the pentahydric alcohol include pentahydric polyglycerin (triglycerin), adonitol, arabitol, and xylitol. Examples of the hexahydric or more alcohol include dipentaerythritol, sorbitol, mannitol, heptahydric polyglycerin (pentaglycerin), and nonahydric polyglycerin (heptaglycerin). These may be used alone or in combination of two or more. From the viewpoint of the wet grip property and the low viscosity, preferably, a trihydric alcohol is used, more preferably, a glycerin is used. In addition, from the viewpoint of improving the biomass degree, preferably, an animal and plant-derived alcohol is used, specifically, a glycerin is used.

The alcohol component may contain a monohydric alcohol and/or a dihydric alcohol.

Examples of the monohydric alcohol include methanol, ethanol, propanol, isopropanol, butanol, isobutanol, s-butanol, t-butanol, pentanol, neopentanol, hexanol, octanol, and 2-ethylhexanol. Examples of the dihydric alcohol include ethylene glycol, propylene glycol, neopentyl glycol, trimethylene glycol, tetramethylene glycol, 1,3-butanediol, and 1,6-hexanediol. These may be used alone or in combination of two or more.

The content ratio of the monohydric alcohol and/or the dihydric alcohol is appropriately set as long as it does not inhibit the excellent effect of the present invention. The content ratio of the monohydric alcohol and/or the dihydric alcohol is, for example, 30% by mass or less, preferably 20% by mass or less, more preferably 10% by mass or less, particularly preferably 0% by mass with respect to the total amount of the alcohol component. In other words, particularly preferably, the alcohol component does not contain a monohydric alcohol and a dihydric alcohol, and consists of only a trihydric or more alcohol.

### [Esterification Reaction]

In an esterification reaction, the carboxy group-containing component and the alcohol component are reacted. A method for reacting the carboxy group-containing component with the alcohol component is not particularly limited.

For example, the carboxy group-containing component containing the rosins and the fatty acids and the alcohol component containing the trihydric or more alcohol may be collectively reacted. In other words, the rosins and the fatty acids may be mixed (primary mixture) in advance at the above-described ratio, and thereafter, the obtained mixture composition and the alcohol component may be mixed (secondary mixture) to be subjected to the esterification reaction. Further, for example, it is possible to mix (collective mixture) the rosins and the fatty acids with the alcohol component without mixing the rosins and the fatty acids in advance to be reacted. In addition, for example, it is also possible to mix (secondary mixture) a composition having both the rosins and the fatty acids from the beginning (tall oil) with the alcohol component to be subjected to the esterification reaction.

In such a case, a mixing ratio of the carboxy group-containing component and the alcohol component is adjusted based on an equivalent ratio (OH/ COOH) of a hydroxyl group (OH) in the alcohol component (trihydric or more alcohols) to the carboxy group (COOH) in the carboxy group-containing component (the rosins and the fatty acids). Preferably, the equivalent ratio is adjusted so that the hydroxyl group (OH) in the alcohol component is excessive with respect to the carboxy group (COOH) in the carboxy group-containing component.

More specifically, the equivalent ratio (OH/ COOH) of the hydroxyl group (OH) in the alcohol component to the carboxy group (COOH) in the carboxy group-containing component is, for example, 0.9 to 3.5, preferably 0.9 to 2.0, more preferably 1.0 to 1.8, further more preferably 1.1 to 1.5, particularly preferably 1.2 to 1.3.

Further, reaction conditions are appropriately set. A reaction temperature is, for example, 150 to 350°C, preferably 200 to 300°C. Reaction time is 1 to 24 hours, preferably 3 to 12 hours.

Then, the ester compound is obtained as the reaction product of the carboxy group-containing component and the alcohol component by the above-described esterification reaction. In such a case, the ester compound contains a collective reaction product of the rosins and the fatty acids, and the above-described alcohol component.

More specifically, in the above-described reaction, first, the fatty acids and the alcohol component are subjected to ester condensation based on a difference between a three-dimensional structure of the fatty acids and the three-dimensional structure of the rosins, thereby forming an ester group. As a result, the fatty acid-based ester compound is obtained as the reaction product of the fatty acids and the alcohol component.

In the above-described reaction, the alcohol component contains the trihydric or more alcohol, and preferably consists of the trihydric or more alcohol. Therefore, the fatty acid-based ester compound contains the fatty acid-based ester compound having three or more ester bonds in one molecule, and preferably consists of the fatty acid-based ester compound having three or more ester bonds in one molecule.

Then, when a certain amount of fatty acid-based ester compound is generated, next, the rosins and the alcohol component are subjected to the ester condensation, thereby forming the ester group. As a result, the rosin-based ester compound is obtained as the reaction product of the rosins and the alcohol component.

In the above-described reaction, the alcohol component contains the trihydric or more alcohol, and preferably consists of the trihydric or more alcohol. Therefore, the rosin-based ester compound contains the rosin-based ester compound having three or more ester bonds in one molecule, and preferably consists of the rosin-based ester compound having three or more ester bonds in one molecule.

As described above, the rosin-based ester compound having three or more ester bonds in one molecule and the fatty acid-based ester compound having three or more ester bonds in one molecule are generated by the collective reaction of the rosins and the fatty acids with the alcohol component. As a result, the ester compound is obtained as the collective reaction product of the rosins and the fatty acids with the alcohol component.

In the following, the collective reaction product of the rosins and the fatty acids with the alcohol component is referred to as a rosin/fatty acid-based ester compound.

The rosin/fatty acid-based ester compound is the ester composition containing the above-described rosin-based ester compound and the above-described fatty acid-based ester compound. Further, the rosin/fatty acid-based ester compound may further contain a by-product.

An example of the by-product includes the ester compound obtained by the esterification reaction of both the fatty acids and the rosins with respect to one molecule of the trihydric or more alcohol (that is, the ester compound obtained by the reaction of one or more molecules of fatty acids and one or more molecules of rosins with respect to one molecule of trihydric or more alcohol). The content ratio of the by-product is appropriately set as long as it does not inhibit the excellent effect of the present invention.

The rosin/fatty acid-based ester compound is contained in a reaction product liquid in the above-described reaction. The reaction product liquid is purified by the known method as needed. Examples of the purification include removal of an unreacted raw material and de-solvents. Examples of a purification method include distillation and extraction.

Progress in the esterification reaction is confirmed based on, for example, an acid value. The upper limit of the acid value of the rosin/fatty acid-based ester compound is, for example, 30 mgKOH/g or less, preferably 25 mgKOH/g or less. The lower limit of the acid value of the ester compound is not particularly limited, and is, for example, 0 mgKOH/g or more.

A method for reacting the carboxy group-containing component with the alcohol component is not limited to the description above. For example, the rosins and the fatty acids may be also used individually without mixing those.

More specifically, for example, it is possible to obtain the rosin-based ester compound by subjecting only the rosins and the alcohol component to the ester condensation without mixing the rosins and the fatty acids. In addition, it is also possible to obtain the fatty acid-based ester compound by subjecting only the fatty acids and the alcohol component to the ester condensation without mixing the rosins and the fatty acids. In other words, the above-described rosin-based ester compound and the above-described fatty acid-based ester compound can be obtained individually.

Then, in this method, for example, the rosin-based ester compound and the fatty acid-based ester compound are mixed, and the ester compound can be obtained as a mixture of those. In other words, the ester compound may be also the mixture of the reaction product of the rosins and the trihydric or more alcohols, and the reaction product of the fatty acids and the trihydric or more alcohol. In other words, the ester compound may be also a mixed composition containing the rosin-based ester compound obtained individually and the fatty acid-based ester compound obtained individually.

More specifically, in this method, first, only the rosins and the alcohol component are subjected to the esterification reaction.

In such a case, the mixing ratio of the rosins and the alcohol component is adjusted based on the equivalent ratio (OH/ COOH) of the hydroxyl group (OH) in the alcohol component to the carboxy group (COOH) in the rosins. Preferably, the equivalent ratio is adjusted so that the hydroxyl group (OH) in the alcohol component is excessive with respect to the carboxy group (COOH) in the rosins.

More specifically, the equivalent ratio (OH/ COOH) of the hydroxyl group (OH) in the alcohol component to the carboxy group (COOH) in the rosins is, for example, 0.9 to 3.5, preferably 0.9 to 2.0, more preferably 1.0 to 1.8, further more preferably 1.1 to 1.5, particularly preferably 1.2 to 1.3.

Further, the reaction conditions are appropriately set. The reaction temperature is, for example, 150 to 350°C, preferably 200 to 300°C. The reaction time is 1 to 24 hours, preferably 3 to 12 hours.

Then, the rosin-based ester compound is obtained as the reaction product of the rosins and the alcohol component by the above-described esterification reaction.

In the above-described reaction, the carboxy group-containing component contains the rosins. Therefore, the rosin-based ester compound has an ester group formed by the ester condensation of the rosins and the alcohol component. In addition, in the above-described reaction, the alcohol component contains the trihydric or more alcohol, and preferably consists of the trihydric or more alcohol. Therefore, the rosin-based ester compound contains the rosin-based ester compound having three or more ester bonds in one molecule, and preferably consists of the rosin-based ester compound having three or more ester bonds in one molecule.

The rosin-based ester compound is contained in the reaction product liquid in the above-described reaction. The reaction product liquid is purified by the known method as needed. Examples of the purification include removal of the unreacted raw material and de-solvents. Examples of the purification method include distillation and extraction.

The progress in the rosin-based esterification reaction is confirmed based on, for example, the acid value. The upper limit of the acid value of the rosin-based ester compound is, for example, 30 mgKOH/g or less, preferably 25 mgKOH/g or less. The lower limit of the acid value of the rosin-based ester compound is not particularly limited, and is, for example, 0 mgKOH/g or more.

On the other hand, in this method, separately from the description above, only the fatty acids and the alcohol component are subjected to the esterification reaction.

In such a case, the mixing ratio of the fatty acids and the alcohol component is adjusted based on the equivalent ratio (OH/ COOH) of the hydroxyl group (OH) in the alcohol component to the carboxy group (COOH) in the fatty acids. Preferably, the equivalent ratio is adjusted so that the hydroxyl group (OH) in the alcohol component is excessive with respect to the carboxy group (COOH) in the fatty acids.

More specifically, the equivalent ratio (OH/ COOH) of the hydroxyl group (OH) in the alcohol component to the carboxy group (COOH) in the fatty acids is, for example, 0.9 to 3.5, preferably 0.9 to 2.0, more preferably 1.0 to 1.8, further more preferably 1.1 to 1.5, particularly preferably 1.2 to 1.3.

Further, the reaction conditions are appropriately set. The reaction temperature is, for example, 150 to 350°C, preferably 200 to 300°C. The reaction time is 1 to 24 hours, preferably 3 to 12 hours.

Then, the fatty acid-based ester compound is obtained as the reaction product of the fatty acids and the alcohol component by the above-described esterification reaction.

In the above-described reaction, the carboxy group-containing component contains the fatty acid. Therefore, the fatty acid-based ester compound has the ester group formed by the ester condensation of the fatty acid and the alcohol component. In addition, in the above-described reaction, the alcohol component contains the trihydric or more alcohol, and preferably consists of the trihydric or more alcohol. Therefore, the fatty acid-based ester compound contains the fatty acid-based ester compound having three or more ester bonds in one molecule, and preferably consists of the fatty acid-based ester compound having three or more ester bonds in one molecule.

The fatty acid-based ester compound is contained in the reaction product liquid in the above-described reaction. The reaction product liquid is purified by the known method as needed. Examples of the purification include removal of the unreacted raw material and de-solvents. Examples of the purification method include distillation and extraction.

The progress in the fatty acid-based esterification reaction is confirmed based on, for example, the acid value. The upper limit of the acid value of the fatty acid-based ester compound is, for example, 30 mgKOH/g or less, preferably 25 mgKOH/g or less. The lower limit of the acid value of the fatty acid-based ester compound is not particularly limited, and is, for example, 0 mgKOH/g or more.

Thereafter, in this method, the rosin-based ester compound and the fatty acid-based ester compound are mixed. The mixing ratio is adjusted so that the ratio of the rosins used in the production of the rosin-based ester compound to the fatty acids used in the production of the fatty acid-based ester compound is within the above-described range.

A mixing method and mixing timing of the rosin-based ester compound and the fatty acid-based ester compound are not particularly limited. For example, the rosin-based ester compound and the fatty acid-based ester compound may be also mixed in advance before use of the additive for rubber. Further, for example, when the additive for rubber is used, the rosin-based ester compound and the fatty acid-based ester compound may be separately added to a rubber component (described later), and the rosin-based ester compound and the fatty acid-based ester compound may be mixed in the rubber component (described later).

Then, the ester compound is obtained by mixing the rosin-based ester compound and the fatty acid-based ester compound. In other words, the ester compound may contain the rosin-based ester compound and the fatty acid-based ester compound.

Further, the ester compound may contain the rosin/fatty acid-based ester compound, the rosin-based ester compound obtained individually, and/or the fatty acid-based ester compound obtained individually. More specifically, the ester compound may contain the three kinds of the rosin/fatty acid-based ester compound, the rosin-based ester compound obtained individually, and the fatty acid-based ester compound obtained individually. In addition, the ester compound may contain the two kinds of the rosin/fatty acid-based ester compound and the rosin-based ester compound obtained individually. In addition, the ester compound may contain the two kinds of the compounds of the rosin/fatty acid-based compound and the fatty acid-based ester compound obtained individually.

In such a case as well, the mixing ratio of each compound is adjusted so that the ratio of the rosins used in each production and the fatty acids used in each production are within the above-described range.

In the additive for rubber, the ester compound is not limited to the above-described ester compound (that is, the reaction product of the carboxy group-containing component and the alcohol component). For example, the ester compound may contain an oil and fat as the fatty acid-based ester compound.

In other words, the ester compound may contain the rosin-based ester compound as the reaction product of the carboxy group-containing component and the alcohol component, and the oil and fat. In other words, as the fatty acid-based ester compound, the oil and fat may be used instead of the reaction product of the fatty acids and the alcohol component.

In such a case, the rosin-based ester compound contains, for example, the rosin-based ester compound as the reaction product of the carboxy group-containing component and the alcohol component. In other words, the rosin-based ester compound contains, for example, the reaction product of the carboxy group-containing component containing the above-described rosins and the above-described alcohol component. The content ratio of the abietadiene acid of the rosins and the iodine value are as described above.

Examples of the oil and fat include coconut oils, linseed oils, citrus oils, pistachio oils, rice oils, safflower oils, apricot oils, cottonseed oils, sesame oils, corn oils, watermelon oils, soybean oils, poppy oils, apple oils, sunflower oils, cactus oils, tall oils, walnut oils, tung oils, clove oils, and castor oils. These may be used alone or in combination of two or more. The oil and fat may be also obtained, for example, as a commercially available product. Further, the oil and fat may be also produced by the known method using, for example, a glycerol 3-phosphoric acid and the fatty acids as raw materials.

The oil and fat contains the molecular structure derived from the fatty acids (hereinafter, a fatty acid structure). Examples of the fatty acids which form the fatty acid structure of the oil and fat (hereinafter, raw material fatty acids) include the above-described fatty acids.

The iodine value of the raw material fatty acids is, for example, 0 to 200, more preferably, 0 to 170, further more preferably 0 to 140, even more preferably 0 to 100, still more preferably 0 to 45, particularly preferably 0 to 15. More specifically, from the viewpoint of the mechanical strength, the iodine value of the raw material fatty acids is, for example, 200 or less, preferably 170 or less, more preferably 140 or less, further more preferably 100 or less, even more preferably 45 or less, particularly preferably 15 or less. Further, the iodine value of the raw material fatty acids is, for example, 0 or more. As in Examples to be described later, the iodine value of the raw material fatty acids is measured in conformity with JIS K 0070 (1992). In addition, as in Examples to be described later, the iodine value of the raw material fatty acids can be also calculated by confirming the peak derived from the fatty acids by the thermal decomposition GCMS analysis and by obtaining the molecular structure of the confirmed fatty acids. Further, the iodine value of the raw material fatty acids of the fatty acid-based ester compound as the reaction product can be also calculated by the same method as the description above.

Further, the ester compound may also further contain the fatty acid-based ester compound as the reaction product of the carboxy group-containing component and the alcohol component in addition to the above-described rosin-based ester compound and the above-described oil and fat. In other words, as the fatty acid-based ester compound, the oil and fat, and the reaction product of the fatty acids and the alcohol component may be also used in combination.

In such a case, the fatty acid-based ester compound as the reaction product is obtained, for example, by reacting the carboxy group-containing component containing the above-described fatty acids with the above-described alcohol component by the above-described method. The iodine value of the fatty acids is as described above.

When the oil and fat and the fatty acid-based ester compound as the reaction product are used in combination, the combination ratio of those is appropriately set in accordance with its purpose and applications.

### [Esterification Catalyst]

In the above-described esterification reaction, an esterification catalyst is added at appropriate timing as needed. In such a case, the additive for rubber may further contain the esterification catalyst in addition to the above-described ester compound.

Examples of the esterification catalyst include metal-based catalysts and non-metal-based catalysts. Examples of the metal-based catalyst include magnesium oxide, antimony trioxide, dibutyltin oxide, tetrabutyl titanate, tetrabutyl zirconate, and zinc acetate. Examples of the non-metal-based catalyst include paratoluene sulfonic acid and stearyl trimethylammonium chloride. These may be used alone or in combination of two or more.

The content of the esterification catalyst is set in accordance with a type and an amount of the carboxy group-containing component and the type and the amount of the alcohol component. For example, the amount of the esterification catalyst is, for example, 0.01 to 1.0% by mass, preferably 0.1 to 0.5% by mass with respect to the total amount of the carboxy group-containing component, the alcohol component, and the esterification catalyst.

### [Additive]

The additive for rubber may further contain an additive as long as it contains the above-described ester compound. Examples of the additive include known additives such as dispersants, vulcanization accelerator aids, reinforcement materials, anti-aging agents, deterioration inhibitors, crack inhibitors, silane coupling agents, vulcanization retardants, vulcanization activators, plasticizers, softeners, oils, and fillers. These additives may be used alone or in combination of two or more. The content ratio of the additive is appropriately set as long as it does not inhibit the excellent effect of the present invention.

### [Function and Effect]

In the above-described additive for rubber, the ester compound contains the rosin-based ester compound having three or more ester bonds in one molecule and the fatty acid-based ester compound having three or more ester bonds in one molecule. Therefore, according to the above-described rubber composition, it is possible to obtain the rubber composition having the excellent low viscosity, and further, to obtain the molded article having the excellent wet grip property.

### 2. Rubber Composition

The rubber composition is the mixture of a rubber raw material compound. The rubber composition contains the known rubber component and the above-described additive for rubber as the rubber raw material compound.

### [Rubber Component]

The rubber component is not particularly limited, and an example thereof includes diene-based rubber. Examples of the diene-based rubber include natural rubber (NR), styrene butadiene rubber (SBR), butadiene rubber (BR), isoprene rubber (IR), butyl rubber (IIR), acrylonitrile butadiene rubber (NBR), ethylene propylene diene rubber (EPDM), and chloroprene rubber (CR). These may be used alone or in combination of two or more. Preferably, natural rubber (NR), styrene butadiene rubber (SBR), and butadiene rubber (BR) are used, more preferably, styrene butadiene rubber (SBR) and butadiene rubber (BR) are used in combination. When the styrene butadiene rubber (SBR) and the butadiene rubber (BR) are used in combination, the combination ratio of those is appropriately set in accordance with its purpose and applications.

### [Additive for Rubber]

The additive for rubber contains the above-described ester compound. Preferably, the additive for rubber consists of an ester compound. As described above, the ester compound may contain the rosin/fatty acid-based ester compound (collective reaction product). In addition, the ester compound may contain the rosin-based ester compound obtained individually and the fatty acid-based ester compound obtained individually. Further, the ester compound may also contain the rosin/fatty acid-based ester compound (collective reaction product), the rosin-based ester compound obtained individually, and/or the fatty acid-based ester compound obtained individually.

The timing at which the additive for rubber is added is not particularly limited. For example, the additive for rubber may be directly added to the above-described rubber component. Further, the additive for rubber may be added, for example, to a raw material component in synthesis of the rubber component, and a composition containing the additive for rubber and the rubber component may be produced, while the rubber component is produced.

In addition, a method for adding the additive for rubber is not particularly limited. For example, the rosin/fatty acid-based ester compound may be added. Further, for example, the rosin-based ester compound and the fatty acid-based ester compound may be mixed in advance, and the mixture of those may be also added. Further, the rosin-based ester compound and the fatty acid-based ester compound may not be mixed, and these may be also added individually.

Preferably, a rosin/fatty acid-based ester compound is added or a rosin-based ester compound and a fatty acid-based ester compound are mixed in advance, and the mixture of those is added. More preferably, a rosin/fatty acid-based ester compound is added.

An addition amount of the additive for rubber is appropriately set in accordance with its purpose and applications. For example, an amount of the additive for rubber is, for example, 0.1 to 50 parts by mass, preferably 1 to 30 parts by mass with respect to 100 parts by mass of the rubber component.

### [Another Compound]

The rubber composition may contain another compound as the rubber raw material compound. Another compound is a component excluding the above-described rubber component and the above-described additive for rubber. Examples of another compound include vulcanizing agents, vulcanization accelerators, and fillers.

An example of the vulcanizing agent includes sulfur. The sulfur is not particularly limited, and examples thereof include powdered sulfur, precipitated sulfur, colloidal sulfur, insoluble sulfur, and highly dispersible sulfur. These may be used alone or in combination of two or more. The mixing ratio of the vulcanizing agent is, for example, 0.5 to 5 parts by mass, preferably 1 part by mass to 3 parts by mass with respect to 100 parts by mass of the rubber component.

Examples of the vulcanization accelerator include zinc oxide, stearic acid, sulfenamide-based vulcanization accelerators, and guanidine-based vulcanization accelerators. Examples of the sulfenamide-based vulcanization accelerator include N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and N,N-diisopropyl-2-benzothiazolesulfenamide. Examples of the guanidine-based vulcanization accelerator include diphenylguanidine (DPG), di-o-tolylguanidine, triphenylguanidine, orthotolylbiguanide, and diphenylguanidine phthalate. These may be used alone or in combination of two or more. The mixing ratio of the vulcanization accelerator is appropriately set in accordance with its purpose and applications.

Examples of the filler include inorganic fillers and organic fillers. Examples of the inorganic filler include calcium carbonate, magnesium carbonate, silicic acid and its salts, silica, clay, talc, mica powders, bentonite, alumina, aluminum silicate, carbon (acetylene black etc.), and aluminum powders. An example of the organic filler includes cork. These may be used alone or in combination of two or more. The mixing ratio of the filler is appropriately set in accordance with its purpose and applications.

Further, the rubber composition may contain the known additive at an appropriate ratio as the rubber raw material compound as needed. Examples of the additive include deterioration inhibitors, crack inhibitors, silane coupling agents, vulcanization aids, vulcanization retardants, vulcanization activators, plasticizers, softeners, and anti-aging agents. Further, examples of the deterioration inhibitor include ozone deterioration inhibitors, heat deterioration inhibitors, and oxidation deterioration inhibitors. The known additive may be, for example, blended in at least any of the above-described each component in advance, and may be blended simultaneously at the time of mixing them.

### [Production of Rubber Composition]

The rubber composition is prepared by mixing the above-described rubber raw material compound by the known method. The mixing method is not particularly limited, and a known kneader is used. Examples of the kneader include rolls, banbury mixers, and kneaders.

A mixing order and the mixing conditions are not particularly limited, and are appropriately set in accordance with a machine to be used or the like. As described above, in the mixture of the rubber composition, a mixing form of the additive for rubber is not particularly limited. In other words, the rosin/fatty acid-based ester compound may be added and mixed with respect to the rubber component. Further, for example, the mixture of the rosin-based ester compound and the fatty acid-based ester compound may be added and mixed with respect to the rubber component. Further, for example, the rosin-based ester compound and the fatty acid-based ester compound may be also added and mixed separately with respect to the rubber component.

### [Function and Effect]

Since the above-described rubber composition contains the above-described additive for rubber, it has the excellent low viscosity. Further, according to the rubber composition, it is possible to obtain the molded article having the excellent wet grip property.

### 3. Molded Article

The molded article is not particularly limited, and examples thereof include known rubber molded articles. Examples of the rubber molded article include tires, sealing materials, insulating materials, vibration-proof materials, and soundproof materials, and preferably, a tire is used. In other words, the tire preferably contains a molded article of the above-described rubber composition, and more preferably is a molded article of the above-described rubber composition.

A method for producing the tire using the above-described rubber composition is not particularly limited, and a known vulcanization molding method is used. In this method, for example, first, the rubber composition (unvulcanized state) is molded and processed, thereby obtaining an unvulcanized tread. Another tire member may be also attached to the unvulcanized tread as needed. Examples of another tire member include sidewall members, shoulder members, bead members, and inner liners. Next, the unvulcanized tread attached to another tire member as needed is heated and pressurized in a vulcanizer to be vulcanized. As a result, the rubber composition is vulcanized, thereby obtaining the tire as the molded article.

### [Function and Effect]

Since the above-described tire contains the molded article of the above-described rubber composition, it has the excellent productivity and also has the excellent wet grip property.

Therefore, the tire is preferably used as tires for vehicles and tires for aircrafts, and more preferably used as tires for vehicles. Examples of the vehicle include automobiles, motorcycles, and railway vehicles.

### Examples

Next, the present invention is described based on Examples and Comparative Examples. The present invention is however not limited by these Examples below. All designations of "part" or "parts" and "%" mean part or parts by mass and % by mass, respectively, unless otherwise particularly specified. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF

### EMBODIMENTS".

### 1. Raw Material

The following raw materials were prepared.

### 1-1. Additive for Rubber

### [Rosins]

(1) Tall oil rosin: abbreviation of TR, acid value of 170 mgKOH/g, trade name: HARTALL R-WW, manufactured by Harima Chemicals Group, Inc.
(2) Gum rosin: abbreviation of GR, acid value of 170 mgKOH/g, trade name: Massoniana Gum Rosin X, manufactured by LONG TAN LANG SON
(3) Disproportionated gum rosin: acid value of 170 mgKOH/g, trade name: G100F, manufactured by Harima Chemicals Group, Inc.

### [Fatty Acids]

(1) Tall oil fatty acid: abbreviation of TOFA, acid value of 200 mgKOH/g, trade name: FA-1, manufactured by Harima Chemicals Group, Inc.
(2) Coconut fatty acid: acid value of 267 mgKOH/g, trade name: coconut fatty acid DC, manufactured by New Japan Chemical Co., Ltd.
(3) Stearic acid: acid value of 200 mgKOH/g, trade name: EDENOR C18-98, manufactured by Maruzen Chemicals Co., Ltd.
(4) Linoleic acid: acid value of 200 mgKOH/g, trade name: linoleic acid, manufactured by FUJIFILM Wako Pure Chemical Corporation

### [Alcohols]

(1) Diethylene glycol: dihydric alcohol
(2) 2-ethylhexanol: monohydric alcohol
(3) Glycerin: trihydric alcohol
(4) Polyglycerin: pentahydric alcohol, trade name: R-PG, manufactured by Sakamoto Yakuhin Kogyo Co., Ltd.

### [Oil and Fat]

(1) Coconut oil: acid value of 0 mgKOH/g, trade name: RBD PKO, manufactured by Wilmar International

### 1-2. Rubber Composition

(1) BR: polybutadiene rubber, trade name: BR01, manufactured by JSR Corporation
(2) SBR: styrene butadiene rubber, trade name: HPR850, manufactured by JSR Corporation
(3) Silica: inorganic filler, trade name: Nipsil AQ, manufactured by Tosoh Silica Corporation
(4) Deterioration inhibitor: ozone deterioration inhibitor: trade name: OZONONE 6C, manufactured by Seiko Chemical Co., Ltd.
(5) Zinc oxide: vulcanization accelerator, trade name: Zinc Oxide, manufactured by SEIDO CHEMICAL INDUSTRY CO., LTD.
(6) Stearic acid: vulcanization accelerator, trade name: STEARIC ACID CAMELLIA, manufactured by NOF CORPORATION
(7) Silane coupling agent: trade name: Si75, manufactured by Evonik Industries AG
(8) Sulfur: vulcanizing agent, trade name: Oil Sulfur; manufactured by Hosoi Chemical Industry Co., Ltd.
(9) Vulcanization accelerator 1: sulfenamide-based vulcanization accelerator, trade name: CZ, manufactured by OUCHI SHINKO CHEMICAL INDUSTRIAL CO., LTD.
(10) Vulcanization accelerator 2: guanidine-based vulcanization accelerator, trade name: SOXINOL D/DG, manufactured by SUMITOMO CHEMICAL COMPANY, LIMITED

### 2.Property Measurement

### (1) Content Ratio of Abietadiene Acid

The content ratio of the abietadiene acid to the total amount of the rosins was calculated by the following method.

That is, the rosins were analyzed by the GCMS under the following conditions, and the peak derived from the abietic acid, the peak derived from the palustric acid, and the peak derived from the neoabietic acid were confirmed.

More specifically, since each component had a distinctive fragment peak, each component was specified from the fragment peak as follows.

Abietic acid: peak in which the fragment peaks 213, 256, and 316 were detected.
Palustric acid: peak in which the ratio of the fragment peak of 241 to 301 was 1 to 1.
Neoabietic acid: peak in which the fragment peaks 135 and 316 were detected.

Further, the ratio of the peak area of the peak derived from the abietic acid to the total peak area (hereinafter, a peak area ratio of the abietic acid) was calculated. The peak area ratio of the abietic acid shows the content ratio of the abietic acid to the total amount of the rosins.

Further, the ratio of the peak area of the peak derived from the palustric acid to the total peak area (hereinafter, the peak area ratio of the palustric acid) was calculated. The peak area ratio of the palustric acid shows the content ratio of the palustric acid to the total amount of the rosins.

Further, the ratio of the peak area of the peak derived from the neoabietic acid to the total peak area (hereinafter, the peak area ratio of the neoabietic acid) was calculated. The peak area ratio of the neoabietic acid shows the content ratio of the neoabietic acid to the total amount of the rosins.

Then, the total sum of the peak area ratio of the abietic acid, the peak area ratio of the palustric acid, and the peak area ratio of the neoabietic acid was calculated. The total sum of the peak area ratio of the abietic acid, the peak area ratio of the palustric acid, and the peak area ratio of the neoabietic acid was calculated as the content ratio of the abietadiene acid to the total amount of the rosins.

### <GCMS Measurement>

Instrument: gas chromatography mass spectrometry (GC-MS), GCMS-TQ8030, manufactured by Shimadzu Corporation
Column: DB-5
Measurement conditions: holding at 150°C for two minutes, next, the temperature was increased to 150°C to 250°C at the rate of 4°C/min, next, the temperature was increased to 250°C to 325°C at the rate of 20°C/min, and a high-boiling component was removed.
Injection port/ FID: 265°C
Split ratio :10
Helium flow rate: 1 ml/min

### (2) Iodine Value of Fatty Acids

The iodine value of the fatty acids used as the raw material in the production of the fatty acid ester compound was measured in conformity with JIS K0070 (1992).

That is, 3.0 g to 0.1 g of fatty acids were dissolved in about 10 ml of hexane, thereby obtaining a hexane solution of the fatty acids. Next, 25 mL of Wijs reagent (manufactured by Kanto Chemical Co., Inc.) was added to the hexane solution of the fatty acids, and a liquid mixture of those was left to stand in the dark for 30 minutes to 1 hour to react the fatty acids with the Wijs reagent, thereby obtaining a test solution.

Next, about 20 mL of potassium iodide and about 100 mL of pure water were added to the above-described test solution. Thereafter, the above-described test solution was titrated with a sodium thiosulfate solution (concentration of 0.1 mol/L, manufactured by FUJIFILM Wako Pure Chemical Corporation).

Then, when the color of the above-described test solution became pale yellow, a few drops of a 1% starch solution was added to the above-described test solution, and the above-described test solution was colored blue. Thereafter, the sodium was further titrated with the sodium thiosulfate solution (concentration of 0.1 mol/L, manufactured by FUJIFILM Wako Pure Chemical Corporation) until the blue color of the above-described test solution disappeared.

In addition, the iodine value of the raw material fatty acids of the oil and fat was calculated by the following method. In addition, according to this method, it is also possible to calculate the iodine value of the raw material fatty acids of the fatty acid ester compound as the reaction product.

In other words, a sample (the oil and fat or the fatty acid ester compound as the reaction product) was analyzed by the thermal decomposition GCMS under the following conditions. Then, each of the peaks derived from the fatty acids (pure substances) contained in the thermal decomposition product was confirmed.

Next, the ratio of the peak area of the peak derived from each of the fatty acids (pure substances) to the total sum of the peak areas of all detected fatty acids was calculated.

Next, the iodine value of each of the fatty acids (pure substances) was calculated from a molecular structure. Thereafter, the iodine value of the raw material fatty acids of the sample (the oil and fat or the fatty acid ester compound as the reaction product) was calculated from the ratio of the peak area of each of the fatty acids (pure substances).

### <GCMS Measurement>

Instrument: gas chromatography mass spectrometry (GC-MS), GCMS-TQ8030, manufactured by Shimadzu Corporation
Column: DB-5
Thermal decomposition incinerator: 500°C
Measurement conditions: holding at 160°C for two minutes, next, the temperature was increased to 160°C to 320°C at the rate of 4°C/min, and next, holding at 320°C for 18 minutes.
Injection port/ FID: 320°C
Split ratio :10
Helium flow rate: 1.3 ml/min

### 3. Production of Additive for Rubber and Rubber Composition

### Example 1

### (1) Additive for Rubber

A four-necked flask equipped with a stirrer, a nitrogen introduction tube, a thermometer, and a Dean-Stark apparatus was charged with 119.6 g of tall oil rosin (TR, rosins, acid value of 170 mgKOH/g, trade name: HARTALL R-WW, manufactured by Harima Chemicals Group, Inc.) and 101.5 g of tall oil fatty acid (TOFA, fatty acids, acid value of 200 mgKOH/g, trade name: FA-1, manufactured by Harima Chemicals Group, Inc.). Further, the temperature of the contents of the flask was increased to 120°C, and the contents were dissolved. Further, the contents of the flask were stirred to be homogenized. Thus, a preliminary mixture was obtained.

Next, 28.9 g of glycerin (trihydric alcohol) was added to the flask. The equivalent ratio (OH/ COOH) of the hydroxyl group in the above-described glycerin to the total amount of the carboxy group in the above-described tall oil rosin and the carboxy group in the above-described tall oil fatty acid was 1.3.

In addition, 0.3 g of paratoluene sulfonic acid (esterification catalyst) was added to the flask. Then, the temperature of the contents of the flask was increased to 260°C over three hours. Also, the contents of the flask were maintained at 260°C for four hours to be esterified. Thereafter, the unreacted raw materials (alcohols) were removed from the flask under reduced pressure. As a result, the ester compound (rosin/fatty acid-based ester compound) was obtained.

The acid value of the ester compound was measured in conformity with a titration method of JIS K 5601-2-1 (1999) (hereinafter, the same applies). The acid value of the ester compound was 21.5 mgKOH/g. The obtained ester compound was used as the additive for rubber.

In Example 1, a mole ratio (rosins/ fatty acids) of the rosins (tall oil rosin, TR) to the fatty acids (tall oil fatty acid, TOFA) used in the production of the ester compound was 5 to 5.

### (2) Rubber Composition

The rubber composition (unvulcanized) was produced by preparing the rubber raw material compound in accordance with the formulations shown in Table 1 and kneading them. More specifically, the components excluding the vulcanization accelerator and sulfur were charged in a 74-ml sealed-type mixer to be kneaded for six minutes. Next, the kneaded product was cooled to room temperature. The kneaded product was used as a master batch. Next, the vulcanization accelerator and the sulfur were added to the above-described master batch, and the mixture was kneaded in the above-described sealed-type mixer for 1.5 minutes. Next, the kneaded product was stretched by an open roll (manufactured by TOYO SEIKI KOGYO CO., LTD.). Thus, the rubber composition (unvulcanized) was obtained.

### Examples 2 to 6, Examples 9 to 19, and Comparative Examples 1 to 4

The rosins, the fatty acids, and the alcohols were collectively reacted, the ester compound (rosin/fatty acid-based ester compound) was synthesized, and the additive for rubber was obtained in the same manner as in (1) of Example 1, except that the formulations were changed to those shown in Tables 2 to 7. Further, the rubber composition was obtained in the same manner as in (2) of Example 1. The acid value of the ester compound is shown in Tables 2 to 7.

### Examples 7 to 8

### (1) Additive for Rubber and Rubber Composition

The rosin-based ester compound (that is, the glycerin ester of the tall oil rosin) was obtained in the same manner as in (1) of Example 1, except that the tall oil fatty acid was not blended, the amount of the tall oil rosin was changed to 223.1 g, and the amount of the glycerin was changed to 26.9 g. The acid value of the rosin-based ester compound is shown in Table 2.

Separately from the description above, the fatty acid-based ester compound (that is, the glycerin ester of the tall oil fatty acid) was obtained in the same manner as in (1) of Example 1, except that the tall oil rosin was not blended, the amount of the tall oil fatty acid was changed to 223.6 g, and the amount of the glycerin was changed to 26.4 g. The acid value of the fatty acid-based ester compound is shown in Table 2.

The mixture of the above-described rosin-based ester compound (that is, the glycerin ester of the tall oil rosin) and the above-described fatty acid-based ester compound (that is, the glycerin ester of the tall oil fatty acid) was used as the additive for rubber, and the rubber composition was obtained in the same manner as in (2) of Example 1.

In Example 7, before the kneading of the rubber raw material compound, the rosin-based ester compound and the fatty acid-based ester compound were mixed, thereby preparing the additive for rubber.

In addition, in Example 8, before the kneading of the rubber raw material compound, the rosin-based ester compound and the fatty acid-based ester compound were not mixed. More specifically, as described above, the rosin-based ester compound and the fatty acid-based ester compound which were prepared individually were added individually, and the rosin-based ester compound and the fatty acid-based ester compound were mixed along with the kneading, thereby preparing the additive for rubber.

In Examples 7 to 8, the mixing amount of the rosin-based ester compound and the fatty acid-based ester compound was adjusted so that the mole ratio (rosins/ fatty acids) of the rosins (that is, the tall oil rosin) used in the production of the rosin-based ester compound to the fatty acids (that is, the tall oil fatty acid) used in the production of the fatty acid-based ester compound was 5 to 5.

### Example 20

### (1) Additive for Rubber and Rubber Composition

The four-necked flask equipped with the stirrer, the nitrogen introduction tube, the thermometer, and the Dean-Stark apparatus was charged with 119.6 g of disproportionated gum rosin (rosins, acid value of 170 mgKOH/g, trade name: G100F, manufactured by Harima Chemicals Group, Inc). Further, the temperature of the contents of the flask was increased to 120°C to be dissolved. Further, the contents of the flask were stirred to be homogenized. Next, 14.5 g of glycerin (trihydric alcohol) was added to the flask. The equivalent ratio (OH/ COOH) of the hydroxyl group in the above-described glycerin to the carboxy group in the above-described disproportionated gum rosin was 1.3. In addition, 0.1 g of paratoluene sulfonic acid (esterification catalyst) was added to the flask. Then, the temperature of the contents of the flask was increased to 270°C over three hours. Also, the contents of the flask were maintained at 270°C for four hours to be esterified. Thereafter, the unreacted raw materials (alcohols) were removed from the flask under reduced pressure. Thus, the rosin-based ester compound (that is, the glycerin ester of the disproportionated gum rosin) was obtained. The acid value of the rosin-based ester compound is shown in Table 7.

Separately from the description above, the coconut oil (acid value of 0 mgKOH/g, trade name: RBD PKO, manufactured by Wilmar International) was prepared as the fatty acid-based ester compound.

The mixture of the above-described rosin-based ester compound (that is, the glycerin ester of the disproportionated gum rosin) and the above-described fatty acid-based ester compound (that is, the coconut oil) was used as the additive for rubber, and the rubber composition was obtained in the same manner as in (2) of Example 1.

In Example 20, before the kneading of the rubber raw material compound, the rosin-based ester compound and the fatty acid-based ester compound were mixed, thereby preparing the additive for rubber.

In Example 20, the mixing amount of the rosin-based ester compound and the fatty acid-based ester compound was adjusted so that the mole ratio (rosins/ fatty acids) of the rosins (that is, the disproportionated gum rosin) used in the production of the rosin-based ester compound to the unit derived from the fatty acids contained in the coconut oil (hereinafter, the fatty acids) was 5 to 5.

### 4. Evaluation

### (1) Wet Grip Property (tanδ (0°C), Dynamic Viscoelasticity Measurement)

First, the vulcanization time of the above-described rubber composition (unvulcanized) was calculated using a rotorless rheometer (manufactured by TOYO SEIKI KOGYO CO., LTD.). The vulcanization time was calculated as twice the value of T95.

Next, the above-described rubber composition (unvulcanized) was vulcanized in a mold (10.5 cm× 10.5 cm× 0.2 cm) at 160°C, thereby obtaining vulcanized rubber. Thereafter, the dynamic viscoelasticity of the vulcanized rubber was measured under the following conditions.

Instrument: dynamic viscoelasticity measurement instrument, manufactured by UBM
Mode: tensile mode
Test piece: length of 32 mm× width of 5 mm
Temperature range: -60°C to 60°C
Temperature rising rate: 2°C/min
Initial strain: 10%
Dynamic strain: 0.025%
Distance between chucks: 20 mm
Measurement frequency: 10 Hz

Then, the value of tanδ at 0°C was determined, thereby evaluating the wet grip property. The sample having the high tanδ had the excellent wet grip property.

### (2) Low Viscosity (ML Measurement)

Mooney viscosity (ML: dN·m) of 6 g of rubber composition (unvulcanized) was measured using the rotorless rheometer (manufactured by TOYO SEIKI KOGYO CO., LTD.). The measurement temperature was 160°C.

### (3) Vulcanization Stability (T5)

Vulcanization stability was evaluated in conformity with JIS K6300-1 (2013).

More specifically, the Mooney viscosity of 30 g of rubber composition (unvulcanized) was measured using a Mooney Viscometer (AM-4, manufactured by TOYO SEIKI KOGYO CO., LTD.). The measurement temperature was 125°C, preheating time was one minute, and a rotor used was an L-type rotor. Then, a Mooney viscosity-time curve was obtained from the measurement results.

Next, the time (T5 (min)) from the lowest Mooney viscosity (Vm) to an increase by five points was measured based on the Mooney viscosity-time curve. Then, the vulcanization stability was evaluated based on the T5. The higher the value of the T5, the more excellent the vulcanization stability.

### (4) Rubber Strength (M300)

The mechanical strength of the vulcanized rubber (hereinafter, rubber strength) was evaluated in conformity with JIS K6251 (2017).

More specifically, the tensile strength of the vulcanized rubber was measured using an autograph (AG-20kN1, manufactured by Shimadzu Corporation). The shape of the measurement sample was a dumbbell-shaped No. 3, and the tensile rate was 500 mm/min. Then, an SS curve (stress-strain curve) was obtained from the measurement results.

Next, the tensile stress (M300 (N/mm²) at an elongation of 300% was measured based on the SS curve. Then, the rubber strength was evaluated based on the M300. The higher the value of the M300, the more excellent the rubber strength.

### [Table 1]

**Table 1**

| Rubber Raw Material Compound | Mixing Amount (parts by mass) |
|---|---|
| BR | 30 |
| SBR | 70 |
| Silica | 70 |
| Deterioration Inhibitor | 1 |
| Zinc Oxide | 3 |
| Stearic Acid | 2 |
| Silane Coupling Agent | 5.6 |
| Additive for Rubber | 30 |
| Sulfur | 1.5 |
| Vulcanization Accelerator 1 | 2.7 |
| Vulcanization Accelerator 2 | 2.3 |

### [Table 2]

**Table 2**

| No. | | | | Ex. 1 | Ex. 2 | Ex. 7 | Ex. 8 |
|---|---|---|---|---|---|---|---|
| | Carboxy Group-Containing Component | Rosins | Tall Oil Rosin (TR) | 47.8 | 44.9 | Tall Oil Rosin Glycerin Ester + Tall Oil Fatty Acid Glycerin Ester (Before Kneading) | Tall Oil Rosin Glycerin Ester + Tall Oil Fatty Acid Glycerin Ester (During Kneading) |
| | | | Gum Rosin (GR) | - | - | | |
| | | | Disproportionated Gum Rosin | - | - | | |
| | | Fatty Acids | Tall Oil Fatty Acid (TOFA) | 40.6 | 38.1 | | |
| | | | Coconut Fatty Acid | - | - | | |
| Mixing Formulation (parts by mass) | | | Stearic Acid | - | - | | |
| | | | Linoleic Acid | - | - | | |
| | Alcohol Component | | Diethylene Glycol (Dihydric) | - | - | | |
| | | | 2-Ethylhexanol (Monohydric) | - | - | | |
| | | | Glycerin (Trihydric) | 11.5 | - | | |
| | | | Polyglycerin (Pentahydric) | - | 17.0 | | |
| | Esterification Catalyst | | Paratoluene Sulfonic Acid | 0.12 | 0.08 | - | - |
| | | | Magnesium Oxide | - | - | - | - |
| | | | Stearyl Trimethylammonium Chloride | - | - | - | - |
| | Total Sum | | | 100 | 100 | 100 | 100 |
| Acid Value (mgKOH/g) | | Rosin/Fatty Acid-Based Ester Compound (Collective Reaction) | | 21.5 | 13.9 | - | - |
| | | Rosin-Based Ester Compound (Individual Reaction) | | - | - | 17.6 | 17.6 |
| | | Fatty Acid-Based Ester Compound (Individual Reaction) | | - | - | 6.10 | 6.10 |
| Mole Ratio | | (Rosins/Fatty Acids) | | 5/5 | 5/5 | 5/5 | 5/5 |
| Content Ratio of Abietadiene Acid of Rosins (% by mass) | | | | 60 | 60 | 60 | 60 |
| Iodine Value of Fatty Acids | | | | 130 | 130 | 130 | 130 |
| Evaluation | | Wet Grip Property | tanδ (0°C) | 0.348 | 0.343 | 0.323 | 0.296 |
| | | Low Viscosity | ML (dN·m) | 3.04 | 3.16 | 2.82 | 2.97 |
| | | Vulcanization Stability | T5 (min) | 38.5 | - | - | - |
| | | Rubber Strength | M300 (N/mm²) | 9.72 | - | - | - |

### [Table 3]

**Table 3**

| No. | | | | Ex. 3 | Ex. 4 | Ex. 5 | Ex. 6 |
|---|---|---|---|---|---|---|---|
| | Carboxy Group-Containing Component | Rosins | Tall Oil Rosin (TR) | 81.3 | 73.3 | 34.2 | 29.5 |
| | | | Gum Rosin (GR) | - | - | - | - |
| | | | Disproportionated Gum Rosin | - | - | - | - |
| | | Fatty Acids | Tall Oil Fatty Acid (TOFA) | 7.7 | 15.5 | 53.9 | 58.4 |
| | | | Coconut Fatty Acid | - | - | - | - |
| Mixing Formulation (parts by mass) | | | Stearic Acid | - | - | - | - |
| | | | Linoleic Acid | - | - | - | - |
| | Alcohol Component | | Diethylene Glycol (Dihydric) | - | - | - | - |
| | | | 2-Ethylhexanol (Monohydric) | - | - | - | - |
| | | | Glycerin (Trihydric) | 10.9 | 11.1 | 11.8 | 11.9 |
| | | | Polyglycerin (Pentahydric) | - | - | - | - |
| | Esterification Catalyst | | Paratoluene Sulfonic Acid | 0.12 | 0.12 | 0.12 | 0.12 |
| | | | Magnesium Oxide | - | - | - | - |
| | | | Stearyl Trimethylammonium Chloride | - | - | - | - |
| | Total Sum | | | 100 | 100 | 100 | 100 |
| | | Rosin/Fatty Acid-Based Ester Compound (Collective Reaction) | | 24.0 | 21.8 | 14.3 | 9.5 |
| Acid Value (mgKOH/g) | | Rosin-Based Ester Compound (Individual Reaction) | | - | - | - | - |
| | | Fatty Acid-Based Ester Compound (Individual Reaction) | | - | - | - | - |
| Mole Ratio | | (Rosins/Fatty Acids) | | 9/1 | 8/2 | 3.5/6.5 | 3/7 |
| Content Ratio of Abietadiene Acid of Rosins (% by mass) | | | | 60 | 60 | 60 | 60 |
| Iodine Value of Fatty Acids | | | | 130 | 130 | 130 | 130 |
| Evaluation | | Wet Grip Property | tanδ (0°C) | 0.414 | 0.376 | 0.279 | 0.257 |
| | | Low Viscosity | ML (dN·m) | 3.44 | 3.25 | 2.99 | 2.78 |
| | | Vulcanization Stability | T5 (min) | - | - | - | - |
| | | Rubber Strength | M300 (N/mm²) | - | - | - | - |

### [Table 4]

**Table 4**

| No. | | | | Comp. Ex. 1 | Comp. Ex. 2 | Comp. Ex. 3 | Comp. Ex. 4 |
|---|---|---|---|---|---|---|---|
| | Carboxy Group-Containing Component | Rosins | Tall Oil Rosin (TR) | 90.9 | - | 37.6 | 30.8 |
| | | | Gum Rosin (GR) | - | - | - | - |
| | | | Disproportionated Gum Rosin | - | - | - | - |
| | | Fatty Acids | Tall Oil Fatty Acid (TOFA) | - | 89.3 | 44.6 | 36.5 |
| | | | Coconut Fatty Acid | - | - | - | - |
| | | | Stearic Acid | - | - | - | - |
| Mixing Formulation (parts by mass) | | | Linoleic Acid | - | - | - | - |
| | Alcohol Component | | Diethylene Glycol (Dihydric) | - | - | 17.6 | - |
| | | | 2-Ethylhexanol (Monohydric) | - | - | - | 32.5 |
| | | | Glycerin (Trihydric) | 8.7 | 10.6 | - | - |
| | | | Polyglycerin (Pentahydric) | - | - | - | - |
| | Esterification Catalyst | | Paratoluene Sulfonic Acid | - | 0.12 | - | 0.14 |
| | | | Magnesium Oxide | - | - | 0.14 | - |
| | | | Stearyl Trimethylammonium Chloride | 0.40 | - | - | - |
| | Total Sum | | | 100 | 100 | 100 | 100 |
| Acid Value (mgKOH/g) | | Rosin/Fatty Acid-Based Ester Compound (Collective Reaction) | | 17.6 | 6.1 | 8.3 | 7.4 |
| | | Rosin-Based Ester Compound (Individual Reaction) | | - | - | - | - |
| | | Fatty Acid-Based Ester Compound (Individual Reaction) | | - | - | - | - |
| Mole Ratio | | (Rosins/Fatty Acids) | | 10/0 | 0/10 | 4/6 | 4/6 |
| Content Ratio of Abietadiene Acid of Rosins (% by mass) | | | | 60 | - | 60 | 60 |
| Iodine Value of Fatty Acids | | | | - | 130 | 130 | 130 |
| Evaluation | | Wet Grip Property | tanδ (0°C) | 0.503 | 0.174 | 0.248 | 0.192 |
| | | Low Viscosity | ML (dN·m) | 3.54 | 2.85 | 3.12 | 3.26 |
| | | Vulcanization Stability | T5 (min) | - | - | - | - |
| | | Rubber Strength | M300 (N/mm²) | - | - | - | - |

### [Table 5]

**Table 5**

| No. | | | | Ex. 9 | Ex. 10 | Ex. 11 | Ex. 12 |
|---|---|---|---|---|---|---|---|
| | Carboxy Group-Containing Component | Rosins | Tall Oil Rosin (TR) | 47.8 | 47.8 | 47.8 | 47.8 |
| | | | Gum Rosin (GR) | - | - | - | - |
| | | | Disproportionated Gum Rosin | - | - | - | - |
| | | Fatty Acids | Tall Oil Fatty Acid (TOFA) | - | - | 18.7 | 9.3 |
| | | | Coconut Fatty Acid | - | - | - | - |
| Mixing Formulation (parts by mass) | | | Stearic Acid | - | 6.9 | 21.9 | 31.3 |
| | | | Linoleic Acid | 40.6 | 33.7 | - | - |
| | Alcohol Component | | Diethylene Glycol (Dihydric) | - | - | - | - |
| | | | 2-Ethylhexanol (Monohydric) | - | - | - | - |
| | | | Glycerin (Trihydric) | 11.5 | 11.6 | 11.5 | 11.5 |
| | | | Polyglycerin (Pentahydric) | - | - | - | - |
| | Esterification Catalyst | | Paratoluene Sulfonic Acid | 0.12 | 0.12 | 0.12 | 0.12 |
| | | | Magnesium Oxide | - | - | - | - |
| | | | Stearyl Trimethylammonium Chloride | - | - | - | - |
| | Total Sum | | | - | - | - | - |
| Acid Value (mgKOH/g) | | Rosin/Fatty Acid-Based Ester Compound (Collective Reaction) | | 16.9 | 12.5 | 16.0 | 16.0 |
| | | Rosin-Based Ester Compound (Individual Reaction) | | - | - | - | - |
| | | Fatty Acid-Based Ester Compound (Individual Reaction) | | - | - | - | - |
| Mole Ratio | | (Rosins/Fatty Acids) | | 5/5 | 5/5 | 5/5 | 5/5 |
| Content Ratio of Abietadiene Acid of Rosins (% by mass) | | | | 60 | 60 | 60 | 60 |
| Iodine Value of Fatty Acids | | | | 181 | 150 | 60 | 30 |
| Evaluation | | Wet Grip Property | tanδ (0°C) | 0.357 | 0.338 | 0.336 | 0.365 |
| | | Low Viscosity | ML (dN· m) | *3.05* | 3.44 | 2.97 | 3.08 |
| | | Vulcanization Stability | T5 (min) | 39.0 | 38.7 | 38.8 | 38.6 |
| | | Rubber Strength | M300 (N/mm²) | 8.92 | 9.23 | 10.00 | 10.19 |

### [Table 6]

**Table 6**

| No. | | | | Ex. 13 | Ex. 14 | Ex. 15 | Ex. 16 |
|---|---|---|---|---|---|---|---|
| | Carboxy Group-Containing Component | Rosins | Tall Oil Rosin (TR) | 53.2 | - | - | - |
| | | | Gum Rosin (GR) | - | 51.9 | 37 | 27.8 |
| | | | Disproportionated Gum Rosin | - | - | 18.5 | 27.8 |
| | | Fatty Acids | Tall Oil Fatty Acid (TOFA) | - | - | - | - |
| | | | Coconut Fatty Acid | 33.9 | 36.6 | 33.8 | 33.8 |
| Mixing Formulation (parts by mass) | | | Stearic Acid | - | - | - | - |
| | | | Linoleic Acid | - | - | - | - |
| | Alcohol Component | | Diethylene Glycol (Dihydric) | - | - | - | - |
| | | | 2-Ethylhexanol (Monohydric) | - | - | - | - |
| | | | Glycerin (Trihydric) | 12.8 | 11.5 | 10.7 | 10.6 |
| | | | Polyglycerin (Pentahydric) | - | - | - | - |
| | Esterification Catalyst | | Paratoluene Sulfonic Acid | 0.12 | 0.12 | 0.12 | 0.12 |
| | | | Magnesium Oxide | - | - | - | - |
| | | | Stearyl Trimethylammonium Chloride | - | - | - | - |
| | Total Sum | | | 100 | 100 | 100 | 100 |
| Acid Value (mgKOH/g) | | Rosin/Fatty Acid-Based Ester Compound (Collective Reaction) | | 11.6 | 9.3 | 5.8 | 7.2 |
| | | Rosin-Based Ester Compound (Individual Reaction) | | - | - | - | - |
| | | Fatty Acid-Based Ester Compound (Individual Reaction) | | - | - | - | - |
| Mole Ratio | | (Rosins/Fatty Acids) | | 5/5 | 5/5 | 5/5 | 5/5 |
| Content Ratio of Abietadiene Acid of Rosins (% by mass) | | | | 60 | 60 | 40 | 30 |
| Iodine Value of Fatty Acids | | | | 8 | 8 | 8 | 8 |
| Evaluation | | Wet Grip Property | tanδ (0°C) | 0.330 | 0.340 | 0.379 | 0.373 |
| | | Low Viscosity | ML (dN·m) | 3.5 | 2.91 | 3.28 | 3.22 |
| | | Vulcanization Stability | T5 (min) | 38.6 | 38.3 | 39.4 | 40.7 |
| | | Rubber Strength | M300 (N/mm²) | 10.48 | 10.32 | 10.30 | 10.50 |

### [Table 7]

**Table 7**

| No. | | | | Ex. 17 | Ex. 18 | Ex. 19 | Ex. 20 |
|---|---|---|---|---|---|---|---|
| | Carboxy Group-Containing Component | Rosins | Tall Oil Rosin (TR) | | | | |
| | | | Gum Rosin (GR) | 18.5 | 9.3 | | |
| | | | Disproportionated Gum Rosin | 37.0 | 46.3 | 53.2 | |
| | | Fatty Acids | Tall Oil Fatty Acid (TOFA) | | | | |
| | | | Coconut Fatty Acid | 33.8 | 33.8 | 33.9 | Disproportionated Gum Rosin Glycerin Ester + Coconut Oil |
| Mixing Formulation (parts by mass) | | | Stearic Acid | | | | |
| | | | Linoleic Acid | | | | |
| | Alcohol Component | | Diethylene Glycol (Dihydric) | | | | |
| | | | 2-Ethylhexanol (Monohydric) | | | | |
| | | | Glycerin (Trihydric) | 10.7 | 10.6 | 12.9 | |
| | | | Polyglycerin (Pentahydric) | | | | |
| | Esterification Catalyst | | Paratoluene Sulfonic Acid | 0.12 | 0.12 | 0.12 | 0.12 |
| | | | Magnesium Oxide | - | - | - | - |
| | | | Stearyl Trimethylammonium Chloride | - | - | - | - |
| | Total Sum | | | 100 | 100 | 100 | 100 |
| Acid Value (mgKOH/g) | | Rosin/Fatty Acid-Based Ester Compound (Collective Reaction) | | 4.8 | 3.8 | 8.6 | - |
| | | Rosin-Based Ester Compound (Individual Reaction) | | - | - | - | 22 |
| | | Fatty Acid-Based Ester Compound (Individual Reaction) | | - | - | - | - |
| Mole Ratio | | (Rosins/Fatty Acids) | | 5/5 | 5/5 | 5/5 | 5/5 |
| Content Ratio of Abietadiene Acid of Rosins (% by mass) | | | | 20 | 10 | 0 | 0 |
| Iodine Value of Fatty Acids | | | | 8 | 8 | 8 | 8 |
| Evaluation | | Wet Grip Property | tanδ (0°C) | 0.347 | 0.353 | 0.325 | 0.354 |
| | | Low Viscosity | ML (dN·m) | 3.29 | 3.4 | 2.82 | 3.08 |
| | | Vulcanization Stability | T5 (min) | 41.6 | 48.9 | 52.2 | 51.8 |
| | | Rubber Strength | M300 (N/mm²) | 10.80 | 10.80 | 10.29 | 10.35 |

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### INDUSTRIAL APPLICATION

The additive for rubber, the rubber composition, and the tire of the present invention are preferably used in, for example, the field of tires for vehicles and the field of tires for aircrafts.

## Claims

1. An additive for rubber containing an ester compound, wherein
the ester compound contains
a rosin-based ester compound having three or more ester bonds in one molecule and
a fatty acid-based ester compound having three or more ester bonds in one molecule.

2. The additive for rubber according to claim 1, wherein
the rosin-based ester compound contains a reaction product of a carboxy group-containing component and an alcohol component,
the carboxy group-containing component contains rosins, and
the alcohol component contains a trihydric or more alcohol.

3. The additive for rubber according to claim 2, wherein
a content ratio of an abietadiene acid is 50% by mass or less with respect to the total amount of the rosins.

4. The additive for rubber according to claim 1, wherein
the fatty acid-based ester compound contains a reaction product of a carboxy group-containing component and an alcohol component, and/or contains an oil and fat;
the carboxy group-containing component contains fatty acids; and
the alcohol component contains a trihydric or more alcohol.

5. The additive for rubber according to claim 4, wherein
an iodine value of the fatty acids is 170 or less and/or
an iodine value of raw material fatty acids of the oil and fat is 170 or less.

6. The additive for rubber according to claim 1, wherein
the ester compound contains a reaction product of a carboxy group-containing component and an alcohol component,
the carboxy group-containing component contains rosins and fatty acids, and
the alcohol component contains a trihydric or more alcohol.

7. The additive for rubber according to claim 6, wherein
the ester compound contains
a collective reaction product of the rosins and the fatty acids, and the alcohol component.

8. The additive for rubber according to claim 6, wherein
the ester compound contains a mixture of
a reaction product of the rosins and the alcohol component, and
a reaction product of the fatty acids and the alcohol component.

9. The additive for rubber according to claim 6, wherein
an iodine value of the fatty acids is 170 or less.

10. The additive for rubber according to claim 6, wherein
a content ratio of an abietadiene acid is 50% by mass or less with respect to the total amount of the rosins.

11. A rubber composition containing the additive for rubber according to any one of claims 1 to 10.

12. A tire containing a molded article of the rubber composition according to claim 11.
